**Europäisches Patentamt**

**European Patent Office**

**Office européen des brevets**

(19)

(11) Numéro de publication: **0 121 497**
**B1**

## FASCICULE DE BREVET EUROPEEN

(12)

(45) Date de publication du fascicule du brevet:
19.11.87

(51) Int. Cl.⁴: **H 02 K 7/08, H 02 K 7/116,
H 02 K 7/06**

(21) Numéro de dépôt: **84810142.4**

(22) Date de dépôt: **26.03.84**

(54) **Actuateur linéaire à moteur électrique.**

(30) Priorité: **30.03.83 CH 1777/83**

(43) Date de publication de la demande:
**10.10.84 Bulletin 84/41**

(45) Mention de la délivrance du brevet:
**19.11.87 Bulletin 87/47**

(84) Etats contractants désignés:
**AT CH DE FR GB IT LI NL SE**

(56) Documents cités:
**BE - A - 501 163
CH - A - 607 433
FR - A - 1 019 524
GB - A - 627 004
GB - A - 1 142 634
US - A - 4 333 026**

**PRODUCT ENGINEERING, vol. 42, no. 10, mai 1971,
pages 19-20, Morgan-Grampian Publishing Corp., New
York, USA;
idem**

(73) Titulaire: **Société industrielle de Sonceboz S.A.,
CH-2605 Sonceboz (Berne) (CH)**

(72) Inventeur: **Pfister, Jean-François, Rue du Soleil 10,
CH-2065 Sonceboz (CH)**

(74) Mandataire: **Dubois, Jean René et al, BOVARD SA
Ingénieurs-Conseils ACP Optingenstrasse 16,
CH-3000 Berne 25 (CH)**

### Description

La présente invention concerne un actuateur linéaire à moteur électrique, comprenant un moteur électrique muni d'un rotor et d'un mobile rotatif de sortie coaxial au rotor, un réducteur de vitesse dont le mobile d'entrée est le mobile de sortie du moteur et dont le mobile de sortie tourne solidairement avec une tige rotative d'actuation comprenant, sur une partie extérieure à l'ensemble du moteur et du réducteur de vitesse, un filetage sur lequel est engagé, ou est destiné à être engagé, un filetage correspondant d'une pièce de sortie de mouvement linéaire coopérant avec ladite tige, cette pièce de sortie de mouvement linéaire étant empêchée de tourner et se mouvant linéairement dans la direction de l'axe de la tige lorsque cette dernière tourne, le réducteur de vitesse ayant son mobile d'entrée et son mobile de sortie coaxiaux l'un à l'autre, et étant placé en bout du moteur, l'axe commun de ses mobiles d'entrée et de sortie étant en alignement avec l'axe du rotor du moteur, ladite tige traversant axialement le rotor et le mobile de sortie du moteur, et présentant sa dite partie filetée du côté du moteur opposé à celui où se trouve le réducteur, cette tige ayant un premier palier à l'extrémité du réducteur opposée au moteur et un deuxième palier à l'endroit de l'extrémité du moteur opposée au réducteur, ce second palier étant établi par une pièce-paliers fixée à l'extrémité correspondante du moteur et fournissant également un palier radialement fixe pour le rotor et/ou le mobile de sortie du moteur. Il existe des actuateurs linéaires du type générique susmentionné, ou tout au moins de la même catégorie, mais les actuateurs actuellement connus présentent certains défauts. Tout d'abord, ils sont en général relativement chers, le moteur et le réducteur étant formés de nombreuses pièces, avec plusieurs agencements de paliers dont certains au moins doivent satisfaire des conditions assez sévères. Il est en effet côuteux de fabriquer et disposer adéquatement les paliers, en principe au nombre de quatre, pour le rotor du moteur et pour la tige tournant avec le mobile de sortie du réducteur. Le montage en palier de cette tige pose lui-même des problèmes qui jusqu'ici n'ont pas reçu de solution vraiment satisfaisante, du fait que la partie agissante, c'est-à-dire la partie filetée, de cette tige est en porte-à-faux et sujette à subir, de la part de l'organe qu'elle meut linéairement par l'intermédiaire de la pièce de sortie de mouvement linéaire, des actions de pression radiale qui tendent à fausser son positionnement dans les paliers. Ce défaut est d'autant plus sensible que les deux paliers qui peuvent guider cette tige sont relativement proches l'un de l'autre, séparés seulement d'une distance correspondant à la hauteur du réducteur de vitesse. On connaît également des dispositifs dans lesquels le rotor d'un moteur est creux et est traversé par un mobile rotatif se mouvant à une vitesse autre que celle du rotor. Dans un cas général, il pourrait paraître simple d'envisager, à une extrémité du moteur, un agencement de paliers combiné pour le rotor et le mobile rotatif susmentionnés.

On connaît aussi, par l'exposé de brevet BE-A-501 163, un système de moteur et de réducteur qui répondrait à la définition générique précédemment énoncée, excepté le fait qu'il ne s'agit pas d'un actuateur linéaire.

Dans le cas d'un dispositif actuateur, cette manière de faire prévoyant le passage de la tige à travers le rotor, ne pourrait par contre pas être envisagée sans que soient résolues des difficultés particulières tenant à la nature même de l'actuateur. Ces difficultés sont relatives à l'important risque, précédemment mentionnée d'une pression latérale appliquée à l'extrémité active de la tige, et tendant à presser celle-ci latéralement, à l'intérieur de la surface de palier la plus proche. Un éventuel frottement accru entre la tige et le rotor serait sans conséquence pour la rotation de la tige elle-même, à condition que le réducteur soit toujours à même de l'entraîner, étant donné le fort couple d'entraînement consécutif à la forte réduction de vitesse, mais il n'en irait pas de même du rotor qui lui n'est apte à fournir qu'un assez faible couple et qui se trouverait aisément bloqué si un frottement latéral intervenait du fait d'une pression axiale exercée vers l'extrémité de la tige. Un prolongement de la distance entre les deux paliers qui guident la tige par déplacement d'un de ces paliers loin de l'espace défini par le boîtier du réducteur de vitesse, c'est-à-dire de l'autre côté du moteur qui jouxte le réducteur de vitesse, n'est donc pas possible d'une façon classique, et une telle réalisation se heurte en tous les cas au problème précédemment mentionné, spécifique au cas d'un actuateur linéaire du type en question.

Un autre facteur désavantageux dans les actuateurs actuellement connus réside dans le nombre et la fabrication côuteuse des pièces formant ensemble actuateur, alors qu'un actuateur de qualité suffisante, de construction avantageuse, fiable, mais apte à être mis sur le marché à un faible prix, serait fort désirable.

Jusqu'à maintenant, il n'en a pas été réalisé de semblables, et le but de la présente invention est justement de réaliser un actuateur, du type générique en question, qui soit plus avantageux que ceux qui sont connus de l'art antérieur, notamment des points de vue précédemment mentionnés.

Conformément à l'invention, ce but est atteint par la présence des caractéristiques énoncées dans la revendication 1 annexée.

Avantageusement, le moteur électrique est du type pas à pas et comprend un rotor qui fait directement corps avec un pignon constituant l'entrée du réducteur de vitesse.

La même disposition peut toutefois être appliquée dans le cas où le moteur est du type, connu en soi, par exemple du document CH-A-607 433 au nom de la requérante, dans lequel un accouplement à hystérésis est monté coaxialement à l'intérieur du rotor, de façon qu'une seule et même pièce annulaire constitue à la fois le rotor du moteur et la partie menante de l'accouplement à hystérésis.

De toute façon, la pièce à paliers qui, dans la conception proposée, fournit à la fois un palier radialement fixe pour le rotor et/ou le mobile de sortie du moteur, et un palier radialement élastique pour la tige rotative de l'actuateur, est avantageusement constituée de matière plastique, et sa partie en forme de douille est raccordée monolithiquement au reste de son corps d'une façon qui permet un léger déplacement radial élastique de la douille, du fait que la matière plastique, quand elle se présente en portions minces, peut être considérée comme matière élastique (alors que, en portions épaisses, on peut plutôt la considérer comme matière relativement rigide).

Afin de réduire autant que possible le nombre et le coût des composants, le boîtier du réducteur de vitesse est avantageusement formé d'une part d'un flanc intercalaire qui est à la fois flanc du moteur et flanc du boîtier de réducteur, et d'autre part d'une pièce en forme de cloche, en matière moulée, typiquement de fonte d'aluminium moulable (ou alors de matière synthétique à forte solidité). Le flanc intercalaire, ou aussi la pièce moulée en forme générale de cloche, présente alors les agencements voulus pour former les paliers du mobile ou des mobiles intermédiaires du réducteur, et la pièce moulée en forme de cloche comprend avantageusement une portée cylindrique qui, de préférence, supporte un roulement à billes ou de type similaire, ou qui pourrait également former elle-même, ou porter, un palier lisse.

D'une façon générale, les revendications dépendantes définissent des formes d'exécution qui sont particulièrement avantageuses des points de vue précédemment mentionnés, de même qu'à d'autres aspects, relatifs à la fiabilité, la simplicité, le coût avantageux, la commodité d'utilisation, etc.

Le dessin annexé illustre, à titre d'exemple, des formes d'exécution de l'objet de l'invention; dans ce dessin:

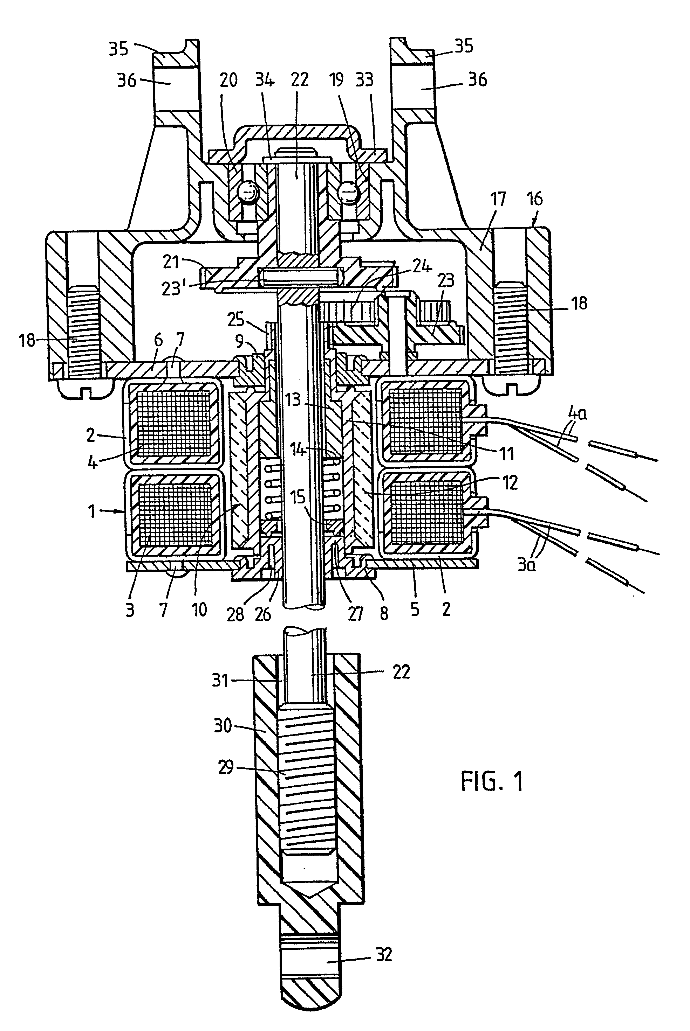

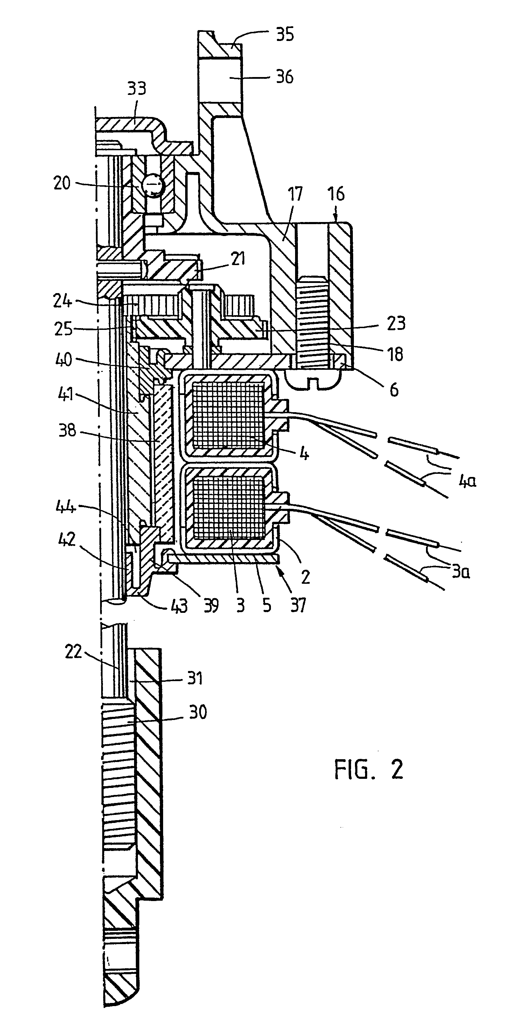

la fig. 1 est une vue en coupe d'un actuateur du type particulier proposé, comportant un moteur pas à pas dont le mobile de sortie est solidaire du rotor, et la fig. 2 est une vue partielle en coupe, similaire à une partie de la fig. 1, et représentant une autre forme d'exécution d'un actuateur selon la conception proposée, comprenant un rotor dont le mobile de sortie est entraîné par le rotor par l'intermédiaire d'un accouplement à hystérésis.

On considérera tout d'abord la forme d'exécution selon la fig. 1.

L'actuateur linéaire montré à la fig. 1 comprend un moteur 1, qui est un moteur pas à pas de type classique comprenant un circuit magnétique de stator 2, du type connu à pôles imbriqués, deux bobinages 3 et 4 étant montés dans le stator. Le fait d'utiliser un moteur pas à pas à deux bobinages permet de commander aisément le moteur en avant et en arrière. On pourrait naturellement utiliser d'autres dispositions connues, certaines à un seul bobinage, pour réaliser un moteur pas à pas apte à fonctionner en avant et en arrière, selon la commande électrique qu'il reçoit. Les impulsions électriques destinées à faire fonctionner le moteur en avant ou en arrière, suivant la phase relative de ses impulsions électriques, sont amenées aux deux bobinages respectivement par les fils 3a et 4a.

Le moteur comprend un flanc d'extrémité 5 qui peut être tout simplement fixé par rivetage, ou par d'autres moyens tels que soudure, collage, etc., contre la partie extrême du stator 2. De l'autre côté du moteur, se trouve un flanc intercalaire 6 également fixé par rivetage ou par un autre moyen à l'autre extrémité du stator 2. Des endroits de rivetage sont, à titre d'exemple, montrés en 7 à la fig. 1. Les deux flancs 5 et 6 portent, centralement, des pièces-paliers respectivement 8 et 9. Un rotor 10 est monté à l'aide de ces paliers 8 et 9. Dans cette forme d'exécution, le rotor 10 est formé par une pièce-support cylindrique 11 sur laquelle une pièce de ferrite 12 à pôles magnétiques permanents est chassée, puis fixée de façon adéquate, par exemple par matage de la pièce-support 11 à une extrémité. Dans la forme d'exécution représentée à la fig. 1, on a encore, à l'intérieur de la pièce-support de rotor 11, une pièce annulaire 13 tendue par un ressort 14 contre une bague 15, afin d'assurer un appui élastique contre les pièces-paliers 8 et 9, de façon à avoir toujours un positionnement axial exact du rotor. Cet agencement particulier du rotor n'est toutefois pas essentiel au dispositif proposé. On pourrait même utiliser un moteur d'un tout autre type, voire un moteur électrique qui serait autre qu'un moteur pas à pas.

Le flanc intercalaire 6 constitue en même temps le flanc d'un réducteur de vitesse désigné d'une façon générale par la référence 16. Ce réducteur de vitesse est monté dans un boîtier qui est formé du flanc intercalaire 6 susmentionné et d'une coque en forme de cloche 17, en matière moulée, dont la périphérie est vissée à la périphérie du flanc intercalaire 6 par des vis 18. Naturellement, toute autre forme de fixation (goupilles, baionnette, crochets, etc...) pourrait être utilisée.

La coque en forme de cloche 17 comprend centralement une surface cylindrique 19 dans laquelle est logé un palier à billes 20. Ce dernier pourrait également être remplacé par exemple par un coussinet lisse, ou encore, selon la matière dont est faite la pièce 19, le palier lisse pourrait directement être constitué par une surface cylindrique intérieure alésée dans cette pièce. Un mobile de sortie 21, constitué par une roue dentée prolongée d'un moyeu est fixé sur une tige 22, par exemple par une clavette 23', et ce mobile de sortie fixé sur la tige est monté dans le palier 20. Deux mobiles intermédiaires de réducteur 23 et 24 transforment le mouvement rotatif du mobile de sortie du moteur, qui est en même temps le mobile d'entrée du réducteur de vitesse, et qui se présente sous la forme d'une denture de pignon 25 à l'extrémité de la pièce-support 11 du rotor. Les mobiles d'engrenages intermédiaires 23 et 24 sont tenus dans des paliers adéquats ménagés dans le flanc intercalaire 6; les paliers pourraient également être prévus dans la coque moulée en forme de cloche 17.

Une particularité importante du réducteur ci-décrit est que la tige 22, actionnée par la roue dentée 21 constituant le mobile de sortie du réducteur de vitesse, traverse axialement le rotor du moteur, et a son second palier dans la pièce-paliers 8. Ainsi, la tige 22, avec la roue dentée 21, est guidée par deux paliers qui sont relativement loin l'un de l'autre, ce qui améliore grandement le guidage de cette tige. On remarque que la pièce paliers, en matière synthétique, 9, montée dans le flanc intercalaire 6, n'a pas de contact avec la tige 22, celle-ci ayant pour palier le roulement à billes (ou autre roulement de type analogue) 20, et d'autre part une partie-douille 26 de la pièce-palier 8. Cette partie en forme de douille 26 est reliée au corps de la pièce-palier 8 par une partie radiale 27, qui forme une portion de faible épaisseur, (cette partie étant réalisée plus mince que le dessin le montre), de sorte qu'elle présente une certaine élasticité, le propre de la matière synthétique étant d'être élastique quand elle est en portion suffisamment mince. La partie-douille 26 est donc susceptible de se déplacer latéralement élastiquement si l'extrémité de la tige 22 subit une pression latérale. Toutefois, cette pression latérale, à laquelle répond un léger déplacement élastique de la partie-douille 26, n'est pas transmise au reste de la pièce-paliers 8, de sorte que le montage en paliers du rotor ne s'en trouve pas affecté et qu'une telle pression latérale n'introduit pas de frottement supplémentaire pour le rotor. On remarque qu'un espace 28 subsiste entre la partie-douille 26 et le corps de la pièce-paliers 8, ce qui permet l'élasticité latérale susmentionnée de la partie-douille 26.

Au bas de la fig. 1, on voit comment la tige 22 comporte une partie filetée 29 autour de laquelle s'engage une pièce 30, comprenant un perçage fileté 31. L'extrémité de cette pièce 30 opposée à celle dans laquelle débouche le trou fileté 31, présente un perçage transversal 32 dans lequel est destinée à s'engager une tige qui sera la partie actionnée par l'actuateur linéaire, cette tige étant une quelconque barre ou partie d'un appareil devant subir un mouvement linéaire. En même temps, l'engagement d'une tige dans le perçage transversal 32 empêche la rotation de la pièce 30, de sorte que, lorsque la tige 22 tourne, la pièce 30 se déplace longitudinalement au lieu de tourner. Si nécessaire, on pourrait prévoir des moyens particuliers, attenant à l'ensemble du moteur 1 et du réducteur 16, pour empêcher tout mouvement rotatif de la pièce 30, qui constitue la pièce de sortie du mouvement linéaire.

On remarque encore que la coque en forme de cloche 17 comprend, en dessus de la partie cylindrique 19 recevant le roulement 20, une creusure plus large où est engagé un couvercle de protection 33. Ce couvercle protège l'extrémité de la tige 22, à laquelle des moyens, typiquement à pas de vis et écrous, 34, sont montés pour assurer la fixation de l'extrémité de la tige 22 dans la partie-moyeu de la roue dentée 21 de sortie du réducteur, en même temps que la fixation de la partie tournante du roulement à billes 20. Le couvercle 33 est fixé par des moyens non représentés, par exemple vis ou crochets, contre le fond de la creusure plus large précitée de la coque moulée 17, d'une façon qui maintient en place la partie fixe du roulement à billes 20.

La coque moulée 17 présente encore, au-dessus de la partie qui loge le roulement à billes, deux cornes 35 dans lesquelles sont ménagés deux alésages axialement alignés 36, ces alésages 36 étant destinés à recevoir une barre ou tringle à laquelle l'actuateur se trouvera fixé.

En fait, l'actuateur travaille de façon à provoquer un déplacement linéaire entre l'axe de la barre engagée dans les perçages 36 des cornes 35 et l'axe de la barre engagée dans le perçage 32 de la pièce 30.

La construction de cet actuateur est particulièrement avantageuse, du fait que le boîtier du réducteur est formé à bon marché par la pièce moulée 17, qui présente déjà toutes les surfaces fonctionnelles nécessaires. D'autre part, le long espace entre les deux paliers (20, 26) qui guident la tige 22, et surtout l'élasticité donnée à la partie-douille 26 formant le second palier de la tige, assurent un excellent guidage de la tige, en même temps qu'une très bonne immunité de celle-ci à l'égard de pressions latérales qu'elle subira fort probablement au niveau de la pièce de sortie de mouvement linéaire 30.

On considérera maintenant la forme d'exécution représentée à la fig. 2 . La construction générale de l'actuateur est la même qu'à la fig. 1, et en particulier, toute la partie formant le réducteur est identique, les mêmes éléments étant représentés par les mêmes signes de référence. Par contre, dans la forme d'exécution selon la fig. 2, le moteur pas à pas 37 est d'un autre type. Son stator présente la même construction, mais son rotor et son mobile de sortie, de même que les paliers correspondants, sont d'un type différent. Le moteur 37 est en effet du type dans lequel le rotor n'est pas solidaire du mobile de sortie du moteur, mais entraîne celui-ci par effet d'accouplement à hystérésis. Un tel moteur est décrit et montré par exemple aux fig. 1 et 2 du document CH-A-607 433, au nom de la requérante. Dans ce moteur, on a une pièce magnétique 38 qui est à la fois rotor et partie menante de l'accouplement à hystérésis. Cette partie 38 est une pièce magnétique tubulaire, elle est montée sur les deux paliers, typiquement en matière plastique, 39 et 40, qui prennent la place des paliers 8 et 9 de la forme d'exécution précédemment considérée. A l'intérieur de cette pièce tubulaire magnétique 38, se trouve une seconde pièce tubulaire 41, en un matériau magnétique ou ferro-magnétique, qui constitue la partie menée de l'accouplement à hystérésis et qui se prolonge par un moyeu guidé dans le palier 40 et à l'extrémité duquel se trouve la denture de pignon 25 qui, comme dans la forme d'exécution précédemment considérée, entraîne les rouages du réducteur de vitesse.

Le palier intermédiaire 40, typiquement de matière plastique, logé dans le flanc intercalaire 6, présente deux surfaces de guidage de palier, l'une, extérieure, pour la pièce tubulaire 38 formant le rotor du moteur et la partie menante de l'accouplement à hystérésis, et l'autre, intérieure, qui guide la partie lisse de la pièce tubulaire 41, entre l'endroit où celle-ci présente la denture de pignon 25 et l'endroit où elle forme la partie menée de l'accouplement à hystérésis.

Par ailleurs, la pièce-paliers 39, montée dans le flanc d'extrémité 5 du moteur, joue le rôle d'un triple palier. Elle présente en effet une surface cylindrique extérieure servant de palier à la pièce rotor-partie menante de l'accouplement, ensuite, une partie cylindrique intérieure servant de palier d'extrémité à la pièce tubulaire 41 constituant la partie menée de l'accouplement à hystérésis, c'est-à-dire le mobile de sortie du moteur, et enfin cette pièce-paliers 39 présente encore une partie en forme de douille 42 qui guide la tige 22 de la même façon que la partie en forme de douille 26 de la forme d'exécution précédemment considérée. On a à nouveau entre le corps de la pièce-paliers 39 et la partie-douille 42 un espace 44 qui autorise un déplacement latéral élastique de la douille 42, lorsque l'extrémité de la tige 22 subit une pression radiale. La partie 43 qui relie la partie-douille 42 au corps de la pièce-paliers 39 constitue également une portion mince, douée d'élasticité. D'autre part, la partie-douille 42 elle-même, de même que la partie-douille 26 dans la forme d'exécution précédemment considérée, peut également, sur certaines parties au moins de sa longueur, être formée en tant que portion mince, assurant une certaine élasticité.

Pour le reste, la forme d'exécution selon la fig. 2 est semblable à la forme d'exécution selon la fig. 1. Ces deux formes d'exécution présentent les mêmes avantages, déjà énumérés en liaison avec la fig. 1. La forme d'exécution selon la fig. 2 présente de plus l'avantage de fournir la possibilité de glissement en cas de couple limite, c'est-à-dire, en l'occurrence, en cas de trop grande résistance à l'avance linéaire de la pièce 30. Dans ce cas, on peut continuer à fournir l'énergie électrique faisant avancer le rotor 38, mais, au moment où la pièce 30 ne peut plus avancer, la tige 22 cesse de se mouvoir, son blocage étant transmis par les engrenages du réducteur à la partie menée 41 de l'accouplement à hystérésis qui stoppe alors sa rotation. Cet agencement présente le grand avantage de ne pas nécessiter un contact d'extrémité de précision pour stopper le mouvement linéaire au moment où il doit être limité, par exemple par le fait d'une butée. Ceci est valable pour les deux sens de fonctionnement. Si l'on veut faire effectuer un certain mouvement linéaire à la pièce 30, on peut sans prévoir de contact de fin de course particulier, donner simplement un entraînement électrique au moteur durant un temps suffisamment long, la pièce 30 parviendra à destination, puis le moteur tournera avec glissement de l'accouplement à hystérésis encore pendant quelques instants, suffisants pour assurer la marge de sécurité voulue, puis le moteur s'arrêtera. Pour le retour de la pièce 30, on peut travailler de la même façon, on n'a pas besoin d'une butée à contact, mais on peut utiliser simplement une butée d'appui, qui arrête le mouvement de la pièce commandée en mouvement linéaire.

## Revendications

1. Actuateur linéaire à moteur électrique, comprenant un moteur électrique muni d'un rotor (10) et d'un mobile rotatif de sortie (25) coaxial au rotor, un réducteur de vitesse (16) dont le mobile d'entrée est le mobile de sortie (25) du moteur et dont le mobile de sortie (21) tourne solidairement avec une tige rotative d'actuation (22) comprenant, sur une partie extérieure à l'ensemble du moteur et du réducteur de vitesse, un filetage (29) sur lequel est engagé, ou est destiné à être engagé, un filetage correspondant d'une pièce (30) de sortie de mouvement linéaire coopérant avec ladite tige (22), cette pièce de sortie de mouvement linéaire étant empêchée de tourner et se mouvant linéairement dans la direction de l'axe de la tige (22) lorsque cette dernière tourne, le réducteur de vitesse (16) ayant son mobile d'entrée (25) et son mobile de sortie (21) coaxiaux l'un à l'autre et étant placé en bout du moteur, l'axe commun de ses mobiles d'entrée (25) et de sortie (22) étant en alignement avec l'axe du rotor du moteur, ladite tige (22) traversant axialement le rotor (10) et le mobile de sortie (25) du moteur, et présentant sa dite partie filetée (29) du côté du moteur opposé à celui où se trouve le réducteur, cette tige (22) ayant un premier palier (20) à l'extrémité du réducteur opposée au moteur et un deuxième palier (26) à l'endroit de l'extrémité du moteur opposée au réducteur (16), ce second palier étant établi par une pièce-paliers (8) fixée à l'extrémité correspondante du moteur et fournissant également un palier radialement fixe pour le rotor et/ou le mobile de sortie du moteur, caractérisé en ce que ladite pièce-paliers (8) présente, en tant que palier pour la tige, une partie douille (26) apte à se déplacer radialement de façon élastique par rapport au reste du corps de cette pièce-paliers, cette dernière étant en une matière «douée d'élasticité en portion mince», et comprenant un corps fixe engagé dans une partie de flanc (5) d'extrémité du moteur, ce corps présentant une portée formant ledit palier radialement fixe pour le rotor (10) et/ou le mobile de sortie du moteur, tandis qu'une autre partie de cette pièce-paliers (8), qui forme la douille (26) constituent ladit second palier de la tige (22), est raccordé monolithiquement au corps de la pièce-paliers (8) de façon que la douille (26) elle-même, et/ou la partie qui la raccorde au corps, présente au moins une portion mince (27) douée d'élasticité.

2. Actuateur selon la revendication 1, caractérisé en ce que le mobile de sortie (21) du réducteur et la tige (22) sont solidaires, le mobile de sortie (25) du moteur étant, selon un agencement connu en soi, entraîné par effet d'hystérésis, avec glissement au-delà d'un couple limite, par le rotor, qui lui est coaxial, le mobile de sortie du moteur qui est le mobile d'entrée du réducteur étant solidaire du rotor formant avec lui un seul corps monté et guidé dans un palier intermédiaire (9) situé à l'endroit où le moteur jouxte le réducteur.

3. Actuateur selon la revendication 1, caractérisé en ce que la dite pièce-paliers (8) est en matière synthétique.

4. Actuateur selon la revendication 1 ou la revendication 3, caractérisé en ce que ladite partie formant douille (26) de la pièce-paliers (8) et raccordée au corps de celle-ci par une partie radiale (22), formant portion mince et étant donc élastique, située à l'extrémité de la partie douille (26), un espace annulaire (28) subsistant entre le corps de la pièce-paliers et la partie formant douille (26), cet espace permettant ainsi un déplacement élastique en direction radiale de la partie formant douille (26), en réponse à une possible action radiale sur la tige (22).

5. Actuateur selon la revendication 2, caractérisé en ce que ledit palier intermédiaire (9) est formé d'une pièce en matière synthétique, une même pièce circulaire formant le pignon d'entrée (25) du réducteur, la portion cylindrique lisse guidée dans le palier intermédiaire (9), et le support sur lequel est fixé fermement et à demeure l'anneau de matière magnétique (12) dans lequel sont établis les pôles magnétiques du rotor.

6. Actuateur selon la revendication 2, caractérisé en ce que ledit palier intermédiaire (9) est formé d'une pièce en matière synthétique, une même pièce circulaire formant le pignon d'entrée (25) du réducteur, la portion cylindrique lisse guidée dans le palier intermédiaire, et l'anneau de matière ferro-magnétique qui constitue la partie menée de l'accouplement à hystérésis.

7. Actuateur selon l'une des revendications 1 à 6, caractérisé en ce que ledit moteur est du type pas à pas.

8. Actuateur selon l'une des revendications 1 à 7, caractérisé en ce que ledit réducteur (16) est établi dans un boîtier comprenant un flanc intercalaire (6), qui est à la fois flanc du moteur, côté réducteur, et flanc du boîtier de réducteur, côté moteur, et une coque moulée (17) en forme générale de cloche, cette coque (17) étant fixée par sa périphérie à la périphérie du flanc intercalaire (6) et présentant, centralement, une portée intérieure cylindrique constituant ledit premier palier ou portant un roulement (20) ou un coussinet qui constitue ce premier palier, ledit flanc intercalaire (6) portant une pièce (9) formant palier intermédiaire pour le mobile d'entrée du réducteur qui est le mobile de sortie ou le rotor du moteur, tandis que ladite coque (17) et/ou ledit flanc intercalaire (6) présentent les agencements de paliers nécessaires pour le ou les mobiles intermédiaires du réducteur de vitesse.

9. Actuateur selon la revendication 8, caractérisé en ce que ladite coque moulée (17) présente deux cornes (35) munies respectivement de perçages (36) perpendiculaires à l'axe des mobiles d'entrée et de sortie du réducteur, ces perçages ayant leurs axes respectifs en alignement l'un avec l'autre pour recevoir une barre à laquelle l'actuateur est destiné à être monté.

10. Actuateur selon l'une des revendications 1 à 9, caractérisé en ce que la pièce de sortie de mouvement linéaire (30) fait partie de l'actuateur, cette pièce de sortie étant allongée et comprenant un trou longitudinal fileté (31) s'engageant sur ledit filetage (29), extérieur, de ladite tige (22), cette pièce de sortie de mouvement linéaire (30) présentant par ailleurs, à son extrémité opposée à celle où débouche ledit trou longitudinal fileté, un perçage transversal (32) pour recevoir une barre destinée à être mue linéairement par l'actuateur dans la direction axiale de ladite tige (22).

**Patentansprüche**

1. Elektrischer Linearantrieb mit einem Elektromotor, der mit einem Rotor (10) und mit einem koaxial zum Rotor angeordneten Ausgangsrad (25) ausgerüstet ist, mit einer Vorrichtung zur Geschwindigkeitsreduktion (16), dessen Eingangsrad zugleich das Ausgangsrad (25) des Motors ist und dessen Ausgangsrad (21) gemeinsam mit einer drehbaren Antriebswelle (22) dreht, die ausserhalb der zusammengefassten Einheit, Motor und Vorrichtung zur Geschwindigkeitsreduktion, ein Gewinde (29) aufweist, auf welchem zumindest vorgesehen ist, ein weiteres Stück (30) mit einem entsprechenden Gewinde einzusetzen, dazu bestimmt, die Linearbewegung, in Verbindung mit der Welle (22), abzunehmen, indem dieses Stück (30) daran gehindert wird zu drehen und sich dadurch linear in der axialen Richtung der Welle (22) bewegt, sobald sich diese letztere dreht, die Vorrichtung zur Geschwindigkeitsreduktion (16) mit seinem zueinander koaxial angeordneten Eingangsrad (25) und Ausgangsrad (21) am Ende des Motors montiert ist, die gemeinsame Achse des Eingangsrades (25) und des Ausgangsrades (21) und die Achse des Rotors (10) vom Motor übereinstimmen, die erwähnte Welle (22) in axialer Richtung den Rotor (10) und das Ausgangsrad (25) des Motors quert, und das erwähnte Gewinde (29) auf der gegenüberliegenden Seite des Motors angeordnet ist als die Vorrichtung zur Geschwindigkeitsreduktion, und diese Welle (22) ein erstes Lager (20) an der Seite der Vorrichtung zur Geschwindigkeitsreduktion, die dem Motor abgewendet ist, und ein zweites Lager (26) auf der Seite des Motors, die der Vorrichtung zur Geschwindigkeitsreduktion (16) abgewendet ist, aufweist, und dieses zweite Lager als ein Lagerteil (8) ausgeführt ist, der am genannten Ende des Motors fixiert ist und zugleich ein festes radiales Lager für den Rotor und/oder für das Ausgangsrad des Motors darstellt, dadurch gekennzeichnet, dass der erwähnte Lagerteil (8) als Lager für die Welle einen Hülsenteil (26) aufweist, der sich in radialer Richtung elastisch verschieben kann im Vergleich zum übrigen Körper des Lagerteiles, der aus einem «leicht elastischen» Material hergestellt ist, und auch eine mit der Gehäuseflanke (5) des Motors fest verbundene Zone aufweist, die eine radial feste Lauffläche für den Rotor (10) und/oder das Ausgangsrad des Motors bildet, währenddem eine andere Zone dieses Lagerteiles (8), den Hülsenteil (26) darstellend, das erwähnte zweite Lager der Welle (22) bildet, und mit dem Lagerteil (8) aus einem Stück hergestellt ist, in dem Sinne, dass das Hülsenteil (26) und/oder die Zone, die den Hülsenteil (26) mit dem übrigen Körper verbindet, zumindest leicht elastisch sind.

2. Antrieb gemäss Anspruch 1, dadurch gekennzeichnet, dass das Ausgangsrad (21) der Vorrichtung zur Geschwindigkeitsreduktion und die Welle (22) als eine Einheit aufgebaut sind; und das Ausgangsrad (25) des Motors ist, nach einer an sich bekannten Anordnung, durch den Rotor angetrieben, mit Hysterese und mit Schlupf ab einem bestimmten Grenzdrehmoment; den Rotor der koaxial zum Ausgangsrad des Motors, das zugleich das Eingangsrad der Vorrichtung zur Geschwindigkeitsreduktion ist, angeordnet ist, und als Einheit des Rotors mit diesem einen einzigen Körper bildet, der in einem Zwischenlager (9) geführt wird, das dort angeordnet ist, wo der Motor mit der Vorrichtung zur Geschwindigkeitsreduktion verbunden ist.

3. Antrieb gemäss Anspruch 1, dadurch gekennzeichnet, dass das besagte Lagerteil (8) aus Kunststoff ist.

4. Antrieb gemäss Anspruch 1 oder 3, dadurch gekennzeichnet, dass die genannte Zone des Lagerteiles (8), die einen Hülsenteil (26) darstellt, mit dem Lagerteil durch eine dünne und zudem elastische Wandung (27) verbunden ist, die sich am einen Ende des Hülsenteiles (26) befindet, dass sich ein ringförmiger Zwischenraum (28) zwischem dem Lagerteil (8) und dem Hülsenteil (26) befindet, der eine elastische radiale Verschiebung des Hülsenteiles (26), zum Ausgleich einer möglichen radialen Bewegung der Welle (22), erlaubt.

5. Antrieb gemäss Anspruch 2, dadurch gekennzeichnet, dass das erwähnte Zwischenlager (9) als ein Kunststoffteil hergestellt ist, dass ein weiteres Rundteil das Eingangs-Zahnrad (25) der Vorrichtung zur Geschwindigkeitsreduktion bildet, dessen polierter zylindrischer Schaft im Zwischenlager (9) gleitet, und dass dieses Rundteil den Träger darstellt, auf welchem fest und dauernd ein Ring aus magnetischem Material (12) aufgebracht ist, in welchem die magnetischen Pole des Rotors vorhanden sind.

6. Antrieb gemäss Anspruch 2, dadurch gekennzeichnet, dass das erwähnte Zwischenlager (9) als ein Kunststoffteil hergestellt ist, dass ein weiteres Rundteil das Eingangsrad (25) der Vorrichtung zur Geschwindigkeitsreduktion bildet, dessen polierter zylindrischer Teil im Zwischenlager (9) gleitet, und das einen ringförmigen Körper aus ferro-magnetischem Material aufweist, der den angetriebenen Teil der Kopplung mit Hysterese darstellt.

7. Antrieb nach einem der Ansprüche 1 bis 6, dadurch gekennzeichnet, dass der erwähnte Motor ein Schrittmotor ist.

8. Antrieb nach einem der Ansprüche 1 bis 7, dadurch gekennzeichnet, dass die erwähnte Vorrichtung zur Geschwindigkeitsreduktion (16) in einem Gehäuse untergebracht ist, das eine eingelegte Seitenwand (6) besitzt, die gleichzeitig Seitenwand des Motors, Richtung Vorrichtung zur Geschwindigkeitsreduktion und Seitenwand der Vorrichtung zur Geschwindigkeitsreduktion, Richtung Motor ist, und das einen gegossenen glockenförmigen Rumpf (17) aufweist, der an seinem äusseren Umfang mit der eingelegten Seitenwand (6) verbunden ist, und der im Zentrum eine nach innen weisende zylindrische Lauffläche zur Aufnahme des genannten ersten Lagers oder eines Kugellagers (20), oder einer Lagerbüchse, die dieses erste Lager bildet, aufweist, dass die besagte eingelegte Zwischenwand (6) einen zusätzlichen, das Zwischenlager (9) bildenden Teil trägt für das Eingangsrad der Vorrichtung zur Geschwindigkeitsreduktion, das auch Ausgangsrad oder Rotor des Motors ist, während der genannte Rumpf (17) und/oder die genannte eingelegte Seitenwand (6) die Vorrichtungen darstellen zur Aufnahme der notwendigen Lager für das oder die Räder der Vorrichtung zur Geschwindigkeitsreduktion.

9. Antrieb gemäss Anspruch 8, dadurch gekennzeichnet, dass der genannte gegossene Rumpf (17) zwei Laschen (35) aufweist, die beidseitig mit Bohrungen (36) ausgestattet sind, die senkrecht zur Achse der Eingangs- und Ausgangsräder der Vorrichtung zur Geschwindigkeitsreduktion angeordnet sind und deren beide Achsen zur Aufnahme einer Stange, an der der Antrieb montiert werden kann, ausgerichtet sind.

10. Antrieb gemäss einem der Ansprüche 1 bis 9, dadurch gekennzeichnet, dass das Stück (30) zur Abgabe der Linearbewegung Teil des Antriebes ist, dass dieses Stück verlängert ist, und ein Längsloch mit Gewinde (31) aufweist, das auf das Aussengewinde (29) der Welle (22) passt, und dass dieses Stück (30) zur Abgabe der Linearbewegung beispielsweise an seinem Ende, das demjenigen mit der erwähnten Längsbohrung gegenüberliegt, eine Querbohrung (32) zur Aufnahme eines Stabes hat, der dazu bestimmt ist, linear in der axialen Richtung der Welle (22) angetrieben zu werden.

**Claims**

1. Electric-motor linear actuator, comprising an electric motor provided with a rotor (10) and with a rotary output wheel (25) coaxial with the rotor, a speed reducer (16) of which the input wheel is the output wheel (25) of the motor and of which the output wheel (21) rotates jointly with a rotary actuation stem (22) comprising, on a portion outside of the motor and the speed reducer as a whole, a thread (29) on which there is fitted, or is intended to be fitted, a corresponding thread of a linear-movement output part (30) cooperating with said stem (22), this linear-movement output part being prevented from rotating and moving linearly in the direction of the axis of the stem (22) when the latter rotates, the speed-reducer (16) having its input wheel (25) and its output wheel (21) coaxial with one another and being placed endwise to the motor, the common axis of its input wheel (25) and output wheel (22) being in alignment with the axis of the rotor of the motor, said stem (22) passing axially through the rotor 10 and the output wheel (25) of the motor, and having its said threaded portion (29) on the side of the motor opposite that where the reducer is, this stem (22) having a first bearing (20) at the end of the reducer opposite the motor and a second bearing (26) at the location of the end of the motor opposite the reducer (16), this second bearing being formed by a bearing part (8) fixed to the corresponding end of the motor and likewise furnishing a radially fixed bearing for the rotor and/or the output wheel of the motor, characterized in that said bearing part (8) has, as a bearing for the stem, a socket portion (26) capable of moving elastically radially relative to the rest of the body of this bearing part, the latter being of a material «endowed with elasticity in a thin portion,» and comprising a fixed body fitted in a disc-like end portion (5) of the motor, this body having a bearing surface forming said radially fixed bearing for the rotor (10) and/or the output wheel of the motor, while another portion of this bearing part (8), which forms the socket (26) constituting said second bearing of the stem (22), is monolithically joined to the body of the bearing part (8) so that the socket (26) itself, and/or the portion which joins it to the body, has at least one thin portion (27) endowed with elasticity.

2. Actuator according to claim 1, characterized in that the output wheel (21) of the reducer and the stem (22) are integral, the output wheel (25) of the motor being, according to an arrangement known per se, driven by hysteresis action, with slipping beyond a limiting torque, by the rotor, which is coaxial to it, the output wheel of the motor which is the input wheel of the reducer being integral with the rotor and forming with it a single body mounted and guided in an intermediate bearing (9) situated at the location where the motor adjoins the reducer.

3. Actuator according to claim 1, characterized in that the said bearing part (8) is of synthetic material.

4. Actuator according to claim 1 or claim 3, characterized in that said portion forming a socket (26) of the bearing part (8) is joined to the body of the latter by a radial portion (22), forming a thin portion and therefore being elastic, situated at the end of the socket portion (26), an annular space (28) remaining between the body of the bearing part and the portion forming a socket (26), this space thus permitting an elastic displacement in radial direction of the portion forming a socket (26), in response to a possible radial action on the stem (22).

5. Actuator according to claim 2, characterized in that said intermediate bearing (9) is formed of a part of synthetic material, one and the same circular part forming the input pinion (25) of the reducer, the smooth cylindrical portion guided in the intermediate bearing (9), and the support on which there is fixed firmly and permanently the ring of magnetic material (12) in which the magnetic poles of the rotor are established.

6. Actuator according to claim 2, characterized in that said intermediate bearing (9) is formed of a part of synthetic material, one and the same circular part forming the input pinion (25) of the reducer, the smooth cylindrical portion guided in the intermediate bearing, and the ring of ferromagnetic material which constitutes the driven part of the hysteresis coupling.

7. Actuator according to one of the claims 1 to 6, characterized in that said motor is of the stepping type.

8. Actuator according to one of the claims 1 to 7, characterized in that said reducer (16) is set up in a housing comprising a disc-like separating wall (6) which is at the same time a sidewall of the motor, on the reducer side, and a sidewall of the reducer housing, on the motor side, and a moulded shell (17) of a general bell shape, this shell (17) being fixed by its periperhy to the periphery of the disc-like separating wall (6) and having, centrally, a cylindrical inner bearing surface constituting said first bearing or supporting a rolling bearing (20) or bearing-bush which constitutes this first bearing, said disc-like separating wall (6) bearing a part (9) forming an intermediate bearing for the input wheel of the reducer which is the output wheel of the rotor of the motor, while said shell (17) and/or said disc-like separating wall (6) has the bearing arrangements necessary for the intermediate wheel or wheels of the speed-reducer.

9. Actuator according to claim 8, characterized in that said moulded shell (17) has two horns (35) respectively provided with bores (36) perpendicular to the axis of the input and output wheels of the reducer, these bores having their respective axes in alignment with one another for receiving a bar to which the actuator is intended to be mounted.

10. Actuator according to one of the claims 1 to 9, characterized in that the linear-movement output part (30) forms part of the actuator, this output part being elongated and including a threaded longitudinal hole (31) fitting on said outer thread (29) of said stem (22), this linear-movement output part (30) further having, at its end opposite that where said threaded longitudinal hole opens out, a transverse bore (32) for receiving a bar intended to be moved linearly by the actuator in the axial direction of said stem (22).

FIG. 1

FIG. 2